# EUROPEAN PATENT APPLICATION

(11) **EP 2 017 985 A2**
(43) Date of publication of application: **21.01.2009**
(21) Application number: 08153634.4
(22) Date of filing: 28.03.2008
(51) Int. Cl.: H04H 60/06

(54) **Method for scheduling a broadcast based on viewing time and broadcast receiving apparatus**

(30) Priority: 19.07.2007 KR 20070072139
(71) Applicant: Samsung Electronics Co., Ltd., Suwon-si, Gyeonggi-do 442-742 (KR)
(72) Inventor: Lee, Hyeon-ji, Gyeonggi-do (KR); Kim, Joon-hwan, Gyeonggi-do (KR); Lee, Chang-soo, Seoul (KR)
(74) Representative: Brandon, Paul Laurence

(57) **Abstract**

A method for scheduling a broadcast based on a viewing start time and a broadcast receiving apparatus using the same are provided. The broadcast scheduling method includes detecting a viewing start time of a current broadcast, and scheduling at least one of a plurality of broadcast relating to the current broadcast based on the viewing start time. Accordingly, desired broadcasts can be scheduled.

## Description

### BACKGROUND OF THE INVENTION

### 1. Field of the Invention

Apparatuses and methods consistent with the present invention relate to scheduling a broadcast.

### 2. Description of the Related Art

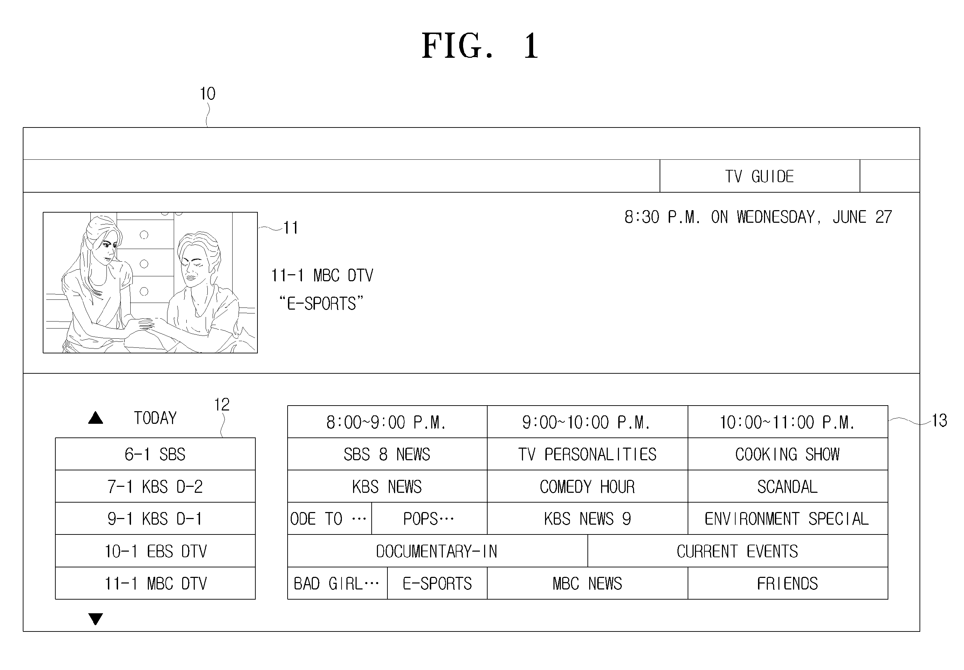

FIG. 1 illustrates an Electronic Program Guide (EPG) which is used to schedule a broadcast in the related art.

The EPG 10 includes a broadcast screen section 11 to show a current program, a section 12 to select a channel, and a section 13 to show broadcast information.

A user may use the EPG 10 to schedule viewing or recording of a broadcast. If the EPG 10 is used, the user adjusts the channel selection section 12 to browse a channel of the desired program. If the channel is selected, the user searches for the time zone of the desired program, identifies the broadcast information, and schedules the desired program.

In the related art, the user has to use the EPG in order to record or view broadcasts relating to the currently viewed broadcast as well as currently unviewed broadcasts.

In addition, in the case of the currently viewed program, if the user does not use the EPG, the user has to request to schedule a rebroadcast or a subsequent broadcast of the current broadcast while viewing the current broadcast, resulting in user inconvenience.

Therefore, there is a need for a method for scheduling a broadcast based on the viewing time and a broadcast receiving apparatus using the same.

### SUMMARY OF THE INVENTION

Exemplary embodiments of the present invention address at least the above problems and/or disadvantages and other disadvantages not described above. Also, the present invention is not required to overcome the disadvantages described above, and exemplary embodiments of the present invention may not overcome any of the problems described above.

Preferred embodiments of the present invention aim to provide a method for scheduling broadcasts relating to the current broadcast, based on a viewing start time, by detecting the viewing start time of the current broadcast.

According to an exemplary aspect of the present invention, there is provided a broadcast scheduling method, which includes detecting a viewing start time of a current broadcast, and scheduling at least one of a plurality of broadcasts relating to the current broadcast based on the viewing start time.

Suitably, in the scheduling, if the viewing start time of the current broadcast is later than a broadcast start time of the current broadcast by more than a certain length of time, scheduling of the broadcast relating to the current broadcast is set.

The broadcast relating to the current broadcast may be at least one of a rebroadcast or a subsequent broadcast of the current broadcast.

Suitably, in the scheduling, if the viewing start time is earlier than the broadcast start time of the current broadcast, if the viewing start time is identical to the broadcast start time of the current broadcast, or if the viewing start time is later than the broadcast start time of the current broadcast by less than a certain length of time, scheduling of the broadcast relating to the current broadcast is set.

The broadcast relating to the current broadcast may be the subsequent broadcast of the current broadcast.

In the scheduling, at least one of viewing, and recording of the at least one broadcast relating to the current broadcast may be scheduled.

The scheduling may include providing a user interface (UI) if the current broadcast is ended, and scheduling at least one broadcast selected by the user using the UI, wherein the UI is used to select at least one broadcast to schedule from among the plurality of broadcasts relating to the current broadcast, and wherein the plurality of broadcasts relating to the current broadcast shown in the UI are changed according to the viewing start time.

The scheduling may further includes providing a UI if the user inputs a request for scheduling while viewing the current broadcast, and scheduling at least one broadcast selected by the user using the UI, wherein the UI is used to select at least one broadcast to schedule from among the plurality of broadcasts relating to the current broadcast, and wherein the plurality of broadcasts relating to the current broadcast shown in the UI are changed according to the viewing start time.

Suitably, in the scheduling, if the viewing start time of the current broadcast is later than the broadcast start time of the current broadcast by more than a certain length of time, scheduling at least one of the rebroadcast and the subsequent broadcast of the current broadcast is set.

Suitably, in the scheduling, if the viewing start time of the current broadcast is one of earlier than the broadcast start time of the current broadcast, identical to the broadcast start time of the current broadcast, and later than the broadcast start time of the current broadcast by less than a certain length of time, scheduling of the subsequent broadcast of the current broadcast is set.

According to another exemplary aspect of the present invention, there is provided a broadcast receiving apparatus including a broadcast receiving unit which receives a broadcast, and a control unit which detects a viewing start time of a current broadcast received through the broadcast receiving unit, and which schedules at least one of a plurality of broadcasts relating to the current broadcast based on the viewing start time.

Suitably, if the viewing start time of the current broadcast is later than a broadcast start time of the current broadcast by more than a certain length of time, the control unit schedules of the broadcast relating to the current broadcast.

The broadcast relating to the current broadcast may be at least one of a rebroadcast and a subsequent broadcast of the current broadcast.

Suitably, if the viewing start time is one of earlier than the broadcast start time of the current broadcast, identical to the broadcast start time of the current broadcast, and later than the broadcast start time of the current broadcast by less than a certain length of time, the control unit schedules the broadcast relating to the current broadcast.

The broadcast relating to the current broadcast may be the subsequent broadcast of the current broadcast.

The control unit may schedule at least one of viewing and recording of the broadcast relating to the current broadcast.

The control unit may provide a UI if the current broadcast is ended, and may schedule at least one broadcast selected by the user using the UI, wherein the UI is used to select at least one broadcast to schedule from among the plurality of broadcasts relating to the current broadcast, and wherein the plurality of broadcasts relating to the current broadcast shown in the UI are changed according to the viewing start time.

The control unit may provide a UI if the user inputs a request for scheduling while viewing the current broadcast, and may schedule at least one broadcast selected by the user using the UI, wherein the UI is used to select at least one broadcast to schedule from among the plurality of broadcasts relating to the current broadcast, and wherein the plurality of broadcasts relating to the current broadcast shown in the UI are changed according to the viewing start time.

Suitably, if the viewing start time of the current broadcast is later than the broadcast start time of the current broadcast by more than a certain length of time, the control unit schedules at least one of the rebroadcast and the subsequent broadcast of the current broadcast.

Suitably, if the viewing start time of the current broadcast is at least one of earlier than the broadcast start time of the current broadcast, identical to the broadcast start time of the current broadcast, and later than the broadcast start time of the current broadcast by less than a certain length of time, the control unit schedules the subsequent broadcast of the current broadcast.

### BRIEF DESCRIPTION OF THE DRAWINGS

The present invention will be more apparent by describing certain exemplary embodiments of the present invention with reference to the accompanying drawings, in which:

FIG. 1 illustrates an EPG which is executed to schedule a broadcast in the related art;

FIG. 2 is a block diagram illustrating a digital television according to an exemplary embodiment of the present invention;

FIG. 3 is a flow chart describing a method for scheduling a broadcast according to an exemplary embodiment of the present invention;

FIG. 4 illustrates a screen for scheduling a broadcast relating to a current broadcast according to an exemplary embodiment of the present invention;

FIG. 5 is a flow chart describing a method for scheduling a broadcast according to another exemplary embodiment of the present invention; and

FIG. 6 is a block diagram illustrating a broadcast receiving apparatus according to yet another exemplary embodiment of the present invention.

### DETAILED DESCRIPTION OF EXEMPLARY EMBODIMENTS OF THE INVENTION

Certain exemplary embodiments of the present invention will now be described in greater detail with reference to the accompanying drawings.

In the following description, same drawing reference numerals are used for the same elements in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

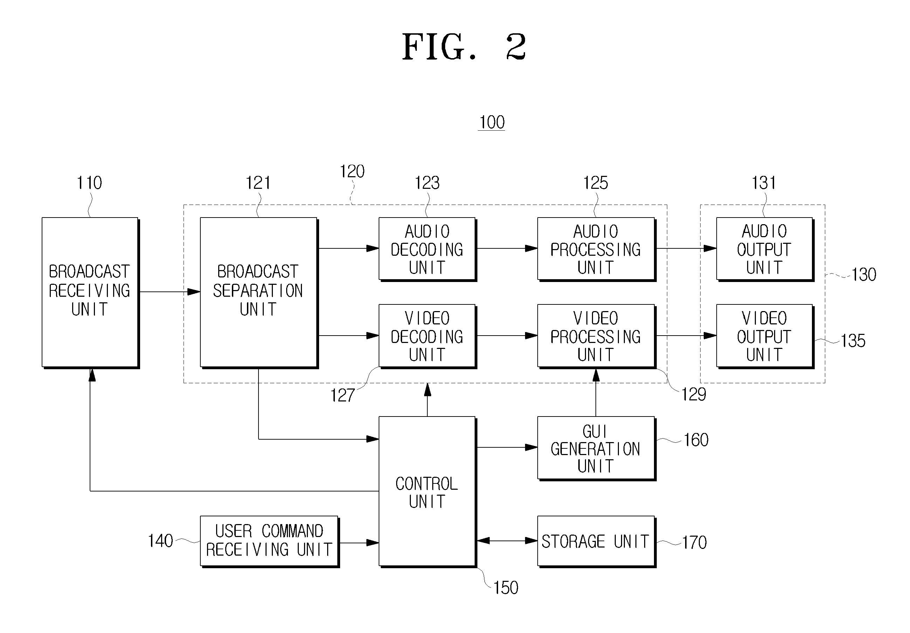

FIG. 2 is a block diagram illustrating a digital television (DTV) 100 according to an exemplary embodiment of the present invention. The DTV 100 provides users with digital broadcasts and a function for scheduling broadcasts relating to the currently viewed program.

As shown in FIG. 2, the DTV 100 includes a broadcast receiving unit 110, a broadcast processing unit 120, a broadcast output unit 130, a user command receiving unit 140, a control unit 150, a graphic user interface (GUI) generation unit 160, and a storage unit 170.

The broadcast receiving unit 110 tunes to, and demodulates one of the broadcasts received wirelessly or through physical connection.

The broadcast processing unit 120 processes broadcast signals output from the broadcast receiving unit 110. The broadcast processing unit 120 includes a broadcast separation unit 121, an audio decoding unit 123, an audio processing unit 125, a video decoding unit 127, and a video processing unit 129.

The broadcast separation unit 121 separates a video signal, an audio signal, and additional data from the broadcast signal.

The separated additional data is transmitted to the control unit 150 in order to be used to provide users with additional information.

The audio decoding unit 123 decodes the audio signal output from the broadcast separation unit 121, and outputs the decompressed audio signal.

The audio processing unit 125 converts the decoded audio signal into a format to be output through a speaker mounted in the DTV 100.

The video decoding unit 127 decodes the video signal output from the broadcast separation unit 121, and outputs the decompressed video signal.

The video processing unit 129 converts the decoded video signal into a format to be output through a display mounted in the DTV 100. The video processing unit 129 also performs color processing and scaling of the video signal.

The GUI generation unit 160 generates a GUI to be shown on the display. The generated GUI is transmitted to the video processing unit 129, and added to video to be shown on the display. This process is called on-screen display (OSD).

The broadcast output unit 130 outputs video and audio corresponding to the video and audio signals output from the broadcast processing unit 120, and provides the output video and audio to the user. The broadcast output unit 130 includes an audio output unit 131 and a video output unit 135.

The audio output unit 131 outputs the audio signal output from the audio processing unit 125 through the speaker or an external device connected using an external output element, for example, an external television.

The video output unit 135 outputs the video signal output from the video processing unit 129 through the display or the external device connected using the external output element, for example, the external television.

The user command receiving unit 140 transmits a user command received from a remote control to the control unit 150, and the control unit 150 controls the entire operation of the DTV 100 according to the user command.

In more detail, the control unit 150 operates the broadcast receiving unit 110 and the broadcast processing unit 120 to provide users with digital broadcast programs.

The storage unit 180 is a medium to store broadcast programs, and may be a memory, a hard disk drive (HDD), or the like.

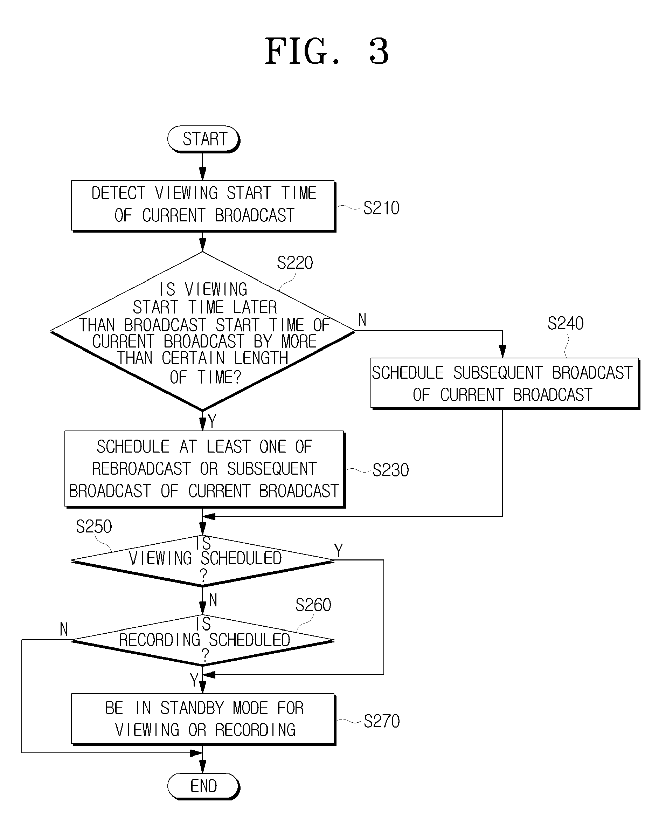

FIG. 3 is a flow chart describing a method for scheduling a broadcast according to an exemplary embodiment of the present invention.

In operation S210, the control unit 150 detects the viewing start time of a current broadcast.

In operation S220, the control unit 150 determines whether the viewing start time is later than a broadcast start time of the current broadcast by more than a certain length of time based on the detected viewing start time.

If the viewing start time is later than the broadcast start time of the current broadcast by more than the certain length of time in operation S220-Y, the user may view the rebroadcast of the current broadcast as he or she did not view the current broadcast from the beginning.

Accordingly, in operation S230, the control unit 150 provides the user with a UI to schedule the rebroadcast together with a UI to schedule a subsequent broadcast of the current broadcast. Specifically, the control unit 150 outputs a signal to provide the UI to the GUI generation unit 160, and the GUI generation unit 160 receives the signal, generates a GUI to be displayed on the display, and outputs the GUI to the video processing unit 129.

In operation S220-N, if the viewing start time is earlier than the broadcast start time of the current broadcast, or if the viewing start time is identical to the broadcast start time of the current broadcast, or if the viewing start time is later than the broadcast start time of the current broadcast by less than a certain length of time, the user may not wish to view the rebroadcast of the current broadcast as he or she may be able to view the current broadcast from the beginning.

Accordingly, in operation S240, the control unit 150 provides the user with a UI to schedule a subsequent broadcast of the current broadcast.

Consequently, the user can schedule the rebroadcast or subsequent broadcast of the current broadcast using the UI. However, the user may wish to view the rebroadcast or subsequent broadcast of the current broadcast in person. Accordingly, in operation S250, the control unit 150 provides a UI to schedule viewing of the rebroadcast or subsequent broadcast of the current broadcast.

If the user schedules viewing of the rebroadcast or subsequent broadcast of the current broadcast in operation S250-Y, the control unit 150 operates the DTV 100 to be in a standby mode for viewing, as the user does not record the broadcast to be viewed in operation S270.

Alternatively, if the user does not schedule viewing of the rebroadcast or subsequent broadcast of the current broadcast in operation S250-N, the control unit 150 provides a UI for the user to select whether to schedule recording of the rebroadcast or subsequent broadcast of the current broadcast, since the user may wish to record the broadcast in operation S260.

If the user schedules recording of the rebroadcast or subsequent broadcast of the current broadcast in operation S260-Y, the control unit 150 operates the DTV 100 to be in the standby mode for recording in operation S270. As described above, scheduling broadcasts relating to the current broadcast can be set based on the viewing start time of the current broadcast.

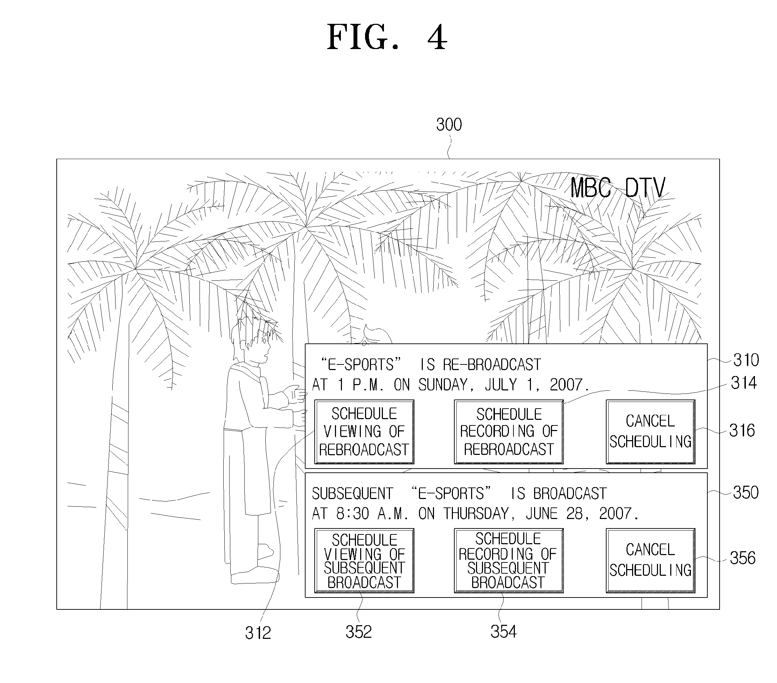

FIG. 4 illustrates a screen for scheduling a broadcast relating to a current broadcast according to an exemplary embodiment of the present invention.

A graphic 310 showing a schedule of the rebroadcast of the current broadcast and a graphic 350 showing a schedule of the subsequent broadcast of the current broadcast are displayed on the lower right of the screen of the current broadcast 300.

If the user has been viewing the current broadcast from the broadcast start time of the current broadcast, but will not view the current broadcast until the broadcast finish time of the current broadcast, the user must take an action such as recording the rebroadcast of the current broadcast. Accordingly, the graphics 310 and 350 may be automatically provided at the broadcast finish time of the current broadcast.

The graphic 310 showing a schedule of the rebroadcast of the current broadcast includes an icon 312 for scheduling viewing of the rebroadcast, an icon 314 for scheduling recording of the rebroadcast, and an icon 316 for canceling scheduling. The user can select whether to schedule viewing or recording of the rebroadcast by selecting one of the icons.

The graphic 350 showing a schedule of the subsequent broadcast of the current broadcast includes an icon 352 for scheduling viewing of the subsequent broadcast, an icon 354 for scheduling recording of the subsequent broadcast, and an icon 356 for canceling scheduling. The user can select whether to schedule viewing or recording of the subsequent broadcast by selecting one of the icons.

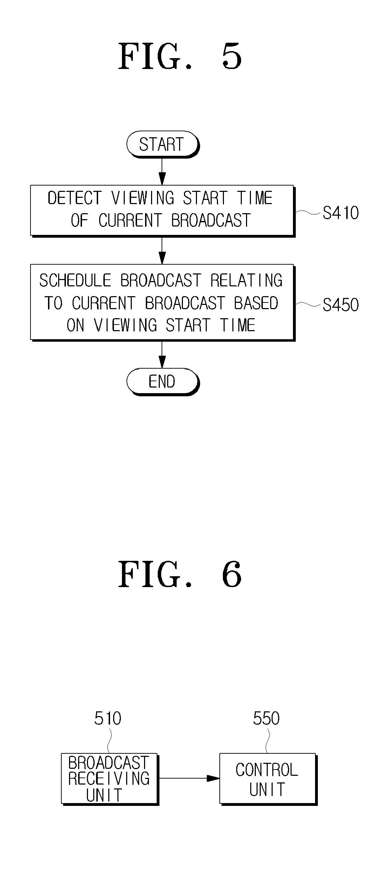

FIG. 5 is a flow chart describing a method for scheduling a broadcast according to another exemplary embodiment of the present invention.

A broadcast receiving apparatus detects a viewing start time of a current broadcast in operation S410, and then schedules a broadcast relating to the current broadcast based on the viewing start time in operation S450.

FIG. 6 is a block diagram illustrating a broadcast receiving apparatus according to yet another exemplary embodiment of the present invention.

The broadcast receiving apparatus includes a broadcast receiving unit 510, and a control unit 550.

The broadcast receiving unit 510 receives and outputs a wired or wireless broadcast to the control unit 550, and the control unit 550 controls the entire operation of the DTV 100 using signals received from the broadcast receiving unit 510.

Therefore, scheduling broadcasts relating to a current broadcast can be set based on the viewing start time of the current broadcast.

In the above exemplary embodiments, the graphics 310 and 350 are described to be automatically provided at the finish time of the current broadcast, but this is just to facilitate understanding of the description. Accordingly, the user can also request to personally schedule a broadcast using an input unit.

In this case, if the viewing start time is later than the broadcast start time of the current broadcast by more than a certain length of time, the graphics 310 and 350 for showing schedules of the rebroadcast and the subsequent broadcast of the current broadcast can be provided, and if the viewing start time is earlier than the broadcast start time of the current broadcast, or if the viewing start time is identical to the broadcast start time of the current broadcast, or if the viewing start time is later than the broadcast start time of the current broadcast by less than a certain length of time, the graphic 350 showing a schedule of the subsequent broadcast of the current broadcast can be provided, as described in the exemplary embodiments above.

As can be appreciated from the above description, scheduling broadcasts relating to a current broadcast can be set based on the viewing start time of the current broadcast so that desired broadcasts can easily be scheduled, users' behavioral needs can be met, and the chances of viewing the desired broadcasts can be increased.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A broadcast scheduling method comprising:
detecting a viewing start time of a current broadcast; and
scheduling at least one broadcast of a plurality of broadcasts relating to the current broadcast based on the viewing start time.

2. The broadcast scheduling method of claim 1, wherein in the scheduling, if the viewing start time of the current broadcast is later than a broadcast start time of the current broadcast by more than a certain length of time, scheduling of the broadcast relating to the current broadcast is set.

3. The broadcast scheduling method of claim 2, wherein the at least one broadcast relating to the current broadcast is at least one of a rebroadcast or a subsequent broadcast of the current broadcast.

4. The broadcast scheduling method of any preceding claim,
wherein in the scheduling, if the viewing start time of the current broadcast is one of earlier than the broadcast start time of the current broadcast, identical to the broadcast start time of the current broadcast, and later than the broadcast start time of the current broadcast by less than a certain length of time, scheduling of the broadcast relating to the current broadcast is set.

5. The broadcast scheduling method of claim 4, wherein the at least one broadcast relating to the current broadcast is the subsequent broadcast of the current broadcast.

6. The broadcast scheduling method of any preceding claim, wherein in the scheduling, at least one of viewing and recording of the at least one broadcast relating to the current broadcast is scheduled.

7. The broadcast scheduling method of any preceding claim, wherein the scheduling comprises:
providing a user interface (UI) if the current broadcast is ended; and
scheduling at least one broadcast selected using the UI,
wherein the UI is used to select at least one broadcast to schedule from among the plurality of broadcasts relating to the current broadcast, and
wherein the plurality of broadcasts relating to the current broadcast shown in the UI are changed according to the viewing start time.

8. The broadcast scheduling method of any preceding claim, wherein the scheduling comprises:
providing a user interface (UI) if a request for scheduling is input while the current broadcast is being viewed; and
scheduling at least one broadcast selected using the UI,
wherein the UI is used to select at least one broadcast to schedule from among the plurality of broadcasts relating to the current broadcast, and
wherein the plurality of broadcasts relating to the current broadcast shown in the UI are changed according to the viewing start time.

9. The broadcast scheduling method of claim 8, wherein in the scheduling, if the viewing start time of the current broadcast is later than the broadcast start time of the current broadcast by more than a certain length of time, scheduling at least one of the rebroadcast and the subsequent broadcast of the current broadcast is set.

10. The broadcast scheduling method of claim 8, wherein in the scheduling, if the viewing start time is one of earlier than the broadcast start time of the current broadcast, identical to the broadcast start time of the current broadcast, and later than the broadcast start time of the current broadcast by less than a certain length of time, scheduling of the subsequent broadcast of the current broadcast is set.

11. A broadcast receiving apparatus (100) comprising:
a broadcast receiving unit (110) which receives a broadcast; and
a control unit (150) which detects a viewing start time of a current broadcast received through the broadcast receiving unit, and schedules at least one broadcast of a plurality of broadcasts relating to the current broadcast based on the viewing start time.

12. The broadcast receiving apparatus (100) of claim 11, wherein the control unit (150) schedules the at least one broadcast relating to the current broadcast if the viewing start time of the current broadcast is later than a broadcast start time of the current broadcast by more than a certain length of time.

13. The broadcast receiving apparatus (100) of claim 12, wherein the at least one broadcast relating to the current broadcast is at least one of a rebroadcast and a subsequent broadcast of the current broadcast.

14. The broadcast receiving apparatus (100) of any one of claims 11-13, wherein the control unit (150) schedules the at least one broadcast relating to the current broadcast if the viewing start time is one of earlier than the broadcast start time of the current broadcast, identical to the broadcast start time of the current broadcast, and later than the broadcast start time of the current broadcast by less than a certain length of time.

15. The broadcast receiving apparatus (100) of claim 14, wherein the at least one broadcast relating to the current broadcast is the subsequent broadcast of the current broadcast.

16. The broadcast receiving apparatus (100) of any one of claims 11-15, wherein the control unit (150) schedules at least one of viewing and recording of the broadcast relating to the current broadcast.

17. The broadcast receiving apparatus (100) of any one of claims 11-16, wherein the control unit (150) provides a user interface (UI) if the current broadcast is ended, and schedules at least one broadcast selected using the UI ,
wherein the UI is used to select at least one broadcast to schedule from among the plurality of broadcasts relating to the current broadcast, and
wherein the plurality of broadcasts relating to the current broadcast shown in the UI are changed according to the viewing start time.

18. The broadcast receiving apparatus (100) of any one of claims 11-17, wherein the control unit (150) provides a user interface (UI) if a request for scheduling is input while the current broadcast is being viewed, and schedules at least one broadcast selected using the UI,
wherein the UI is used to select at least one broadcast to schedule from among the plurality of broadcasts relating to the current broadcast, and
wherein the plurality of broadcasts relating to the current broadcast shown in the UI are changed according to the viewing start time.

19. The broadcast receiving apparatus (100) of claim 18, wherein the control unit (150) schedules at least one of a rebroadcast and a subsequent broadcast of the current broadcast if the viewing start time of the current broadcast is later than the broadcast start time of the current broadcast by more than a certain length of time.

20. The broadcast receiving apparatus (100) of claim 18, wherein the control unit (150) schedules a subsequent broadcast of the current broadcast if the viewing start time is one of earlier than the broadcast start time of the current broadcast, identical to the broadcast start time of the current broadcast, and later than the broadcast start time of the current broadcast by less than a certain length of time.
